# EUROPÄISCHE PATENTSCHRIFT

(11) **EP 3 253 528 B1**
(45) Veröffentlichungstag und Bekanntmachung des Hinweises auf die Patenterteilung: **09.06.2021**
(21) Anmeldenummer: 16714213.2
(22) Anmeldetag: 01.02.2016
(51) Int. Cl.: B23K 20/12, B23K 37/053

(54) **VORRICHTUNG UND VERFAHREN ZUM MOBILEN RÜHRREIBSCHWEISSEN VON ZWEI ROHRARTIGEN STRUKTUREN**
APPARATUS AND METHOD FOR MOBILE FRICTION STIR WELDING OF TWO TUBULAR STRUCTURES
DISPOSITIF ET PROCÉDÉ POUR LE SOUDAGE PAR FRICTION-MALAXAGE MOBILE DE DEUX STRUCTURES TUBULAIRES

(30) Priorität: 06.02.2015 DE 102015001483
(43) Veröffentlichungstag der Anmeldung: 13.12.2017
(73) Patentinhaber: Grenzebach Maschinenbau GmbH, 86663 Asbach-Baeumenheim (DE)
(72) Erfinder: WEIGL, Markus, 86609 Donauwörth (DE)
(74) Vertreter: Kindermann, Peter
(86) Internationale Anmeldenummer: PCT/DE2016/000035
(87) Internationale Veröffentlichungsnummer: WO 2016/124168

(56) Entgegenhaltungen:
- EP-A2- 0 803 314
- WO-A1-2014/056020
- DE-U1-202014 002 642
- US-A- 4 336 436
- US-A1- 2013 299 561

## Beschreibung

Die Erfindung betrifft eine Vorrichtung und ein Verfahren zum mobilen Rührreibschweißen von zwei rohrartigen Strukturen.

Zum Verschweißen der Verbindung zweier Rohre wird in der Regel das sogenannte Orbitalschweißen verwendet. Orbitalschweißen ist ein vollmechanisches Schutzgasschweißverfahren, bei dem ein Lichtbogen maschinell ohne Unterbrechung 360 Grad um Rohre oder andere Rundkörper herumgeführt wird. Der Ausdruck Orbitalschweißen leitet sich hierbei vom lateinischen "orbis", der Kreis ab.

Zum Stand der Technik ist aus der Patentliteratur unter anderem beispielsweise die Druckschrift EP 2 027 962 A1 bekannt, die ein Schweißgeräte und ein Schweißverfahren zum Orbitalschweißen von Rohren betrifft. In dieser Druckschrift werden einige Nachteile des Standes der Technik genannt, deren Beseitigung das Ziel der Anmeldung ist. Nach den Angaben im Anspruch 1 handelt es sich hier um ein Lichtbogen-Schweißgerät, umfassend einen Schweißkopf zur Aufbringung eines Schweißlichtbogens mit einer Schweißleistung auf eine Fügestelle zwischen einem ersten und zweiten Werkstück zur Erzeugung eines Schweißbades, wobei der Schweißlichtbogen relativ zu dem ersten und zweiten Werkstück bewegbar ist.

Als Erfindung wird hier im Kennzeichen des Anspruchs 1 beansprucht, dass das Schweißgerät eine Temperaturmessvorrichtung zur Messung einer Temperatur im Umfeld des Schweißbades und eine Regelungsvorrichtung umfasst, wobei die Regelungseinrichtung ausgebildet ist, in Abhängigkeit von der gemessenen Temperatur zumindest ein Signal zu generieren, welches zur Steuerung von zumindest einem Schweißparameter dient. Weiter wird beansprucht, dass hierbei vorzugsweise die Temperaturmessvorrichtung als Pyrometer ausgebildet ist und / oder die Temperaturmessvorrichtung so angeordnet ist, dass die Temperatur an zumindest einem Temperaturmesspunkt vor, neben und / oder hinter dem Schweißbad gemessen wird, wobei vorzugsweise die Temperaturmessvorrichtung so angeordnet ist, dass sie einen Bereich umfasst, dessen Temperatur einen Rückschluss auf die Schweißbadtemperatur zulässt.

Generell führt das Orbitalschweißen von rohrförmigen Bauteilen mit konventionellen Schweißverfahren, wie dem WIG- oder MAG-Schweißen aufgrund der Einwirkung der Schwerkraft auf die Schmelze und das Schutzgas zu einem sehr hohen Aufwand hinsichtlich der Prozesskontrolle.

Bei der Anwendung des Orbitalschweißens im Feld, beispielsweise für erdverlegte Stromtrassen und Pipelines, sind konventionelle Orbitalverfahren zudem sehr anfällig hinsichtlich der Umgebungsbedingungen. Hier können der Wind und anfallende Feuchtigkeit den Schweiß-Prozess empfindlich stören.

Aus der Druckschrift EP 0 803 314 A2 ist eine Vorrichtung zum Rührreibschweißen von zwei rohrartigen Strukturen als Fügepartner bekannt, wobei ein ringförmiger Grundkörper, der mittels eines Scharniers aufklappbar ist und auf der Gegenseite des Scharniers mittels einer Verschluss-Vorrichtung betriebsfest verbunden werden kann, die rohrartigen Fügepartner umfasst. Am Umfang des Grundkörpers sind radial verstellbare Druckstempel verteilt, die der Halterung der rohrartigen Fügepartner dienen.

Die Druckschrift WO 2014/056020 A1 offenbart eine Ausricht-Vorrichtung für den Gebrauch bei flexiblen Rohrnetzen, die einen aufklappbaren Ring mit einer Vielzahl von Ausricht-Elementen aufweist, welche am Ring beweglich verteilt sind. Hierbei werden in Radialrichtung angetriebene Hubzylinder verwendet.

Ferner ist aus der Druckschrift US 4 336 436 A eine Vorrichtung und ein Verfahren zum Schweißen von Umfangs-Verbindungen bei Pipelines bekannt, wobei mittels zweier Schweißköpfe unter Zufügen eines Schweißdrahtes eine Umfangs-Schweißnaht ausgebildet wird.

Weiterhin ist aus der Druckschrift US 2013/299561 A1 eine Vorrichtung und ein Verfahren zum Rührreibschweißen an gekrümmten Oberflächen und insbesondere an Rohren bekannt, wobei ein Stützdorn innerhalb der zu verbindenden Rohre eingefügt ist und die zu verbindenden Stirnflächen der Rohre einer besonderen Oberflächenbehandlung unterworfen werden.

Die Druckschrift DE 20 2014 002642 U1 offenbart eine Vorrichtung zur Erhöhung der Festigkeit einer Schweißnaht beim Rührreibschweißen, wobei ein so genanntes Endloch am Ende von Rührreibschweißnähten zuverlässig vermieden wird.

Der Erfindung liegt die Aufgabe zugrunde, eine Vorrichtung und ein Verfahren zum mobilen Rührreibschweißen zu schaffen, wobei ein Gewicht verringert, eine Bedienbarkeit verbessert und eine Justiergenauigkeit erhöht ist.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 6 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Anfang der neunziger Jahre des vorigen Jahrhunderts wurde das Rührreibschweißen, oder auch Reibrührschweißen genannt, entwickelt. Das Rührreibschweißen wird unter anderem für das Schweißen von Aluminiumlegierungen mittlerweile in vielen relevanten Industriebereichen erfolgreich eingesetzt. Die Anwendungen reichen hierbei von Einzelstücken und Kleinserien bis hin zu größeren Serien. Zum wirtschaftlichen Erfolg tragen neben der hervorragenden Güte der Schweißnaht auch die hohe Reproduzierbarkeit und die geringen Vorbereitungsarbeiten und Aufwendungen zur Nachbearbeitung bei. Dieses Verfahren lässt sich sehr gut automatisieren und erlaubt eine Qualitätsüberwachung auf der Basis einer Maschinenüberwachung.

Beim Rührreibschweißen wird im Fügebereich der zu verbindenden Materialien mittels der Reibung zwischen einem rotierenden, gleichzeitig translatorisch bewegten und mit Druck aufgebrachten, Werkzeug Reibungswärme erzeugt. Das Werkzeug wird entlang des Fügebereichs bewegt und verrührt das plastifizierte Material im Inneren der Naht der zu verbindenden aneinander stoßenden Materialien. Der aufgebrachte Druck presst das plastifzierte Material zusammen. Am Ende dieser Naht wird das Werkzeug aus dem Verbindungsbereich herausgezogen und die Schweißnaht ist unmittelbar belastbar. Diese Technologie wird erfindungsgemäß bei dem Verschweißen von rohrartigen Strukturen verwendet.

Es zeigen im Einzelnen:
- Fig. 1:: Schnittdarstellungen einer Anordnung zum Rührreibschweißen
- Fig. 2:: Schnittdarstellungen einer Alternativ - Anordnung zur Fig.1
- Fig. 3:: Schnittdarstellung mit einem Schweißschuh
- Fig. 4:: Schnittdarstellung der vertikalen Bewegung eines Schweißschuhs
- Fig. 5:: Schnittdarstellung der Erfassung der Prozessparameter

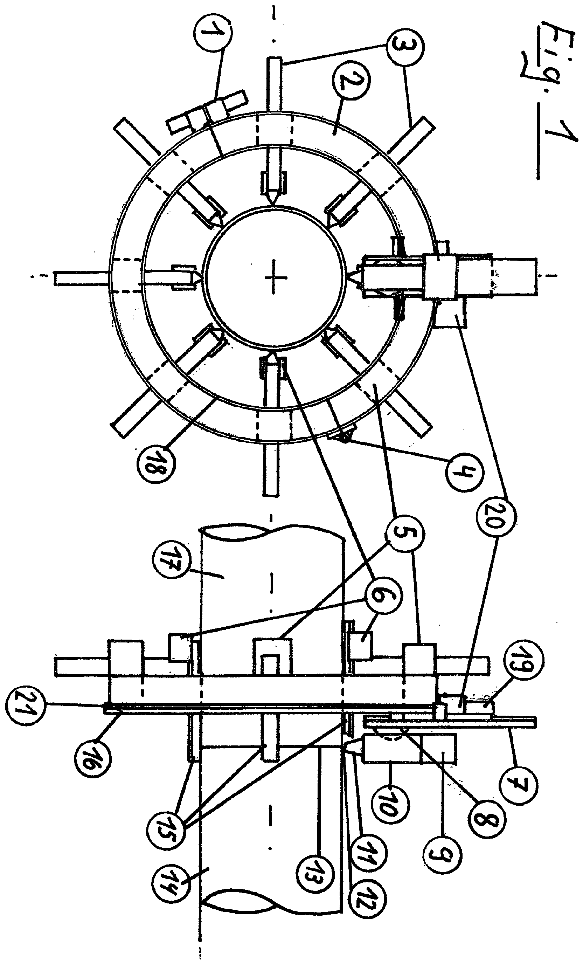

Die Fig. 1 zeigt zwei Schnittdarstellungen einer Anordnung zum Rührreibschweißen. Die linke Schnittdarstellung zeigt eine Anordnung zum mobilen Rührreibschweißen bei der Verbindung zweier Rohre. Die hier verwendete Vorrichtung zum Rührreibschweißen besteht aus einem ringförmigen Grundkörper 2 der im transportablen Zustand aus zwei Ringhälften besteht die auf der einen Seite mittels eines Scharniers 4 verbunden sind und auf der gegenüber liegenden Seite mittels einer Verschluss - Vorrichtung 1 betriebsfest verbunden werden können. Diese Verschluss - Vorrichtung 1 kann mechanisch mittels eines Schnappverschlusses, einer Schraubverbindung, elektromechanisch oder hydraulisch wirken. In einer besonderen Ausgestaltung kann die einwandfreie Funktion der Verschluss - Vorrichtung 1 mittels einer, nicht dargestellten, elektronischen Überwachungs - Vorrichtung gesichert sein. Zur Zentrierung und Fixierung des ringförmigen Grundkörpers 2 auf den zu verschweißenden Rohren, bzw. Rohrteilen, ist in den Grundkörper 2 eine Anzahl von, am Umfang verteilten, jeweils mittels eines Antriebs 5 radial verstellbaren, Hubelementen 3 eingefügt. Hierbei kann es sich um Hubzylinder oder Spindelantriebe handeln. Die Anzahl und die Dimensionierung dieser Hubelemente 3 richten sich nach dem Durchmesser der zu verschweißenden Rohre. In der Fig. 1 sind beispielhaft acht Hubelemente 3 eingezeichnet. Somit gewährleistet die radial wirksame Verstellbarkeit jedes Hubelements 3 im Grundkörper 2 die Anwendung der vorgestellten Anordnung zum Rührreibschweißen in einem bestimmten Bereich der zu bearbeitenden Rohrdurchmesser. Bei der Über - oder Unterschreitung eines solchen Bereichs sind deshalb unterschiedlich große Grundkörper 2 vorzuhalten. In der linken Schnittdarstellung ist der innere Führungssteg 18 des Grundkörpers 2 aufgezeigt.

In der rechten Schnittdarstellung der Fig.1 sind die zu verschweißenden Rohrteile in der Seitenansicht zu sehen, wobei der vordere Fügepartner mit 17 und der hintere Fügepartner mit 14 bezeichnet sind. An der, den zu verschweißenden Rohrteilen zugewandten, Seite jedes Hubelements 3 ist in der rechten Schnittdarstellung jeweils ein Antrieb 6 für die Bewegung einer Haltebacke 15 jedes Hubelements in horizontaler Richtung zu erkennen, wobei dieser in der linken Schnittdarstellung weniger deutlich darzustellen ist. Durch den Antrieb 6 ist gewährleistet, dass jeweils eine Haltebacke 15 in die Richtung des Grundkörpers 2 zurückgezogen werden kann wenn der Schweißvorgang bei einem Umlauf des, den Vorgang des Rührreibschweißens bewirkenden, Spindelkopfs 11 in den Bereich der jeweiligen Haltebacke gelangt. Dies ist in der rechten Schnittdarstellung im Bereich der Schweißnaht 13 an der Oberseite des vorderen Fügepartners 17 und des hinteren Fügepartners 14 zu sehen.

Bei dem Verschieben einer Haltebacke 15 in horizontaler Richtung ist über eine Steuerung gewährleistet, dass mittels des Antriebs 5 für die Bewegung eines Hubelements 3 eine leichte Lockerung des jeweiligen Hubelements vorgesehen wird um die Bewegung der jeweiligen Haltebacke in horizontaler Richtung zu ermöglichen.

Der Antrieb 5 für die Bewegung eines Hubelements 3 in vertikaler Richtung ist an der Rückseite des ringförmigen Grundkörpers zu erkennen. Auf der anderen Seite des Grundkörpers 2 ist an der Oberseite der beiden Fügepartner ein Vertikalschlitten 7 mit einer Aufhängung 8 und einem Antrieb 9 für den Spindelkopf 11 dargestellt. Ein Antrieb 19 zur kraftgeregelten Vertikalbewegung des Gehäuses 10 des Spindelkopfs 11 liefert den notwendigen Anpressdruck bei dem Vorgang des Rührreibschweißens. Ein Zahnkranz 21 am ringförmigen Grundkörper 2 an dem ein Antrieb 20 entlang läuft ermöglicht die Orbitalbewegung des Spindelkopfs 11 zum Anlegen einer Schweißnaht mittels eines Reibschweißpins 12.

In der rechten Schnittdarstellung ist der äußere Führungssteg 16 des Grundkörpers 2 aufgezeigt.

Die grundlegende Zentrierung des Grundkörpers (2) mit den beiden Fügepartnern kann im einfachsten Fall von einer Bedienperson erfolgen. Für eine notwendige exaktere Positionierung können jedem Hubelement jeweils ein, nicht näher eingezeichneter und bezeichneter, Laser - Abstands - Sensor vorgesehen sein. Auf diese Weise kann automatisch erreicht werden, dass jeder Hubzylinder gleich weit ausgefahren wird und somit der Grundkörper (2) auf den beiden Fügepartnern zentriert ist. Anstelle einer manuellen Grundzentrierung kann es in einer Sonderbauform vorgesehen sein, dass jedes Hubelement nach einer manuellen Schließung des ringförmigen Grundkörpers, automatisch gleichzeitig solange ausgefahren wird, bis alle Hubelemente, nach programmgesteuerten Korrekturen, den gleichen Abstand zu den Fügepartnern haben.

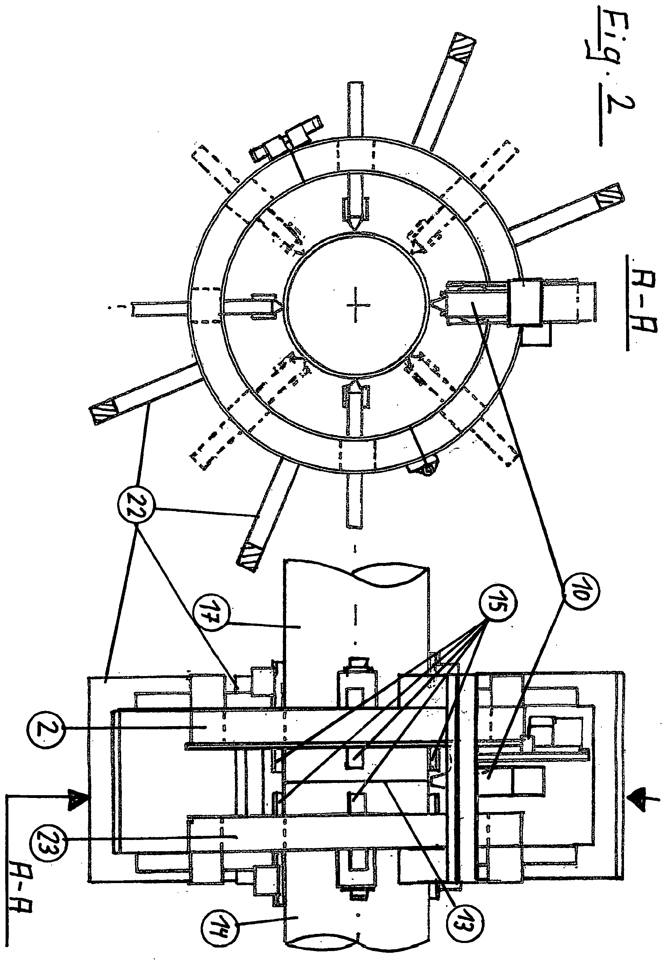

Fig. 2: zeigt eine Schnittdarstellungen einer Alternativ - Anordnung zur Fig.1 Diese Variante ist besonders für große Außendurchmesser der Rohre und hohe Schweißkräfte, insbesondere bei hoher Rohrwanddicke geeignet.

Hier werden die beiden zu verschweißenden Rohrteile nicht mittels den, an einem einzelnen ringförmigen Grundkörper 2 gelagerten, Haltebacken 15 für den Schweißvorgang fixiert, sondern zur Fixierung des zweiten Rohrteils wird ein zweiter ringförmiger Grundkörper in der Form eines Fixierrings 23 verwendet, der mittels einer Anzahl Verbindungsbügel 22 mit dem anderen ringförmigen Grundkörper 2 verbunden ist. Dies bedeutet, dass bei dieser Anordnung der Antrieb 6 für die Bewegung der jeweiligen Haltebacken 15 in horizontaler Richtung nicht notwendig ist, da die Haltebacken 15 der beiden Grundkörper 2 und des Fixierrings 23 einen freien Zugang zur Schweißnaht 13 ermöglichen.

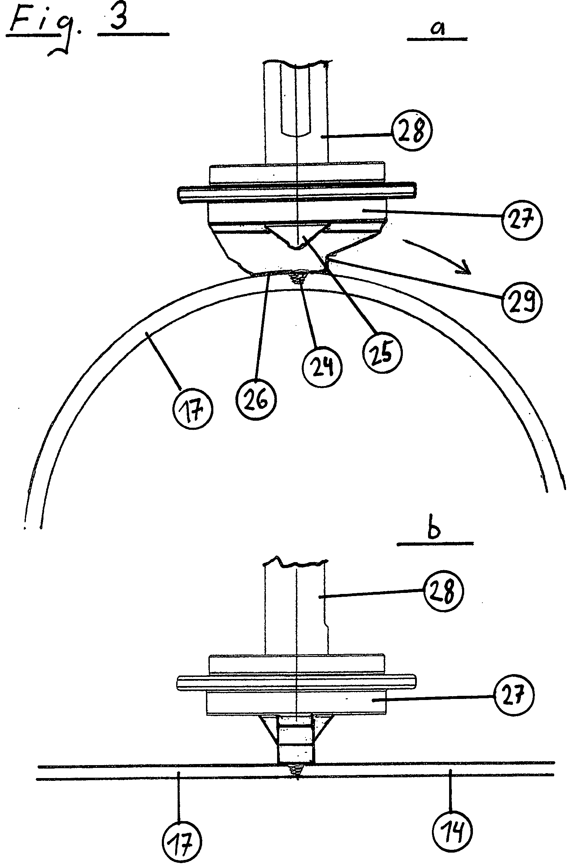

Die Fig. 3: zeigt eine Schnittdarstellung mit einem Schweißschuh.. Der obere Teil a) der Fig. 3 zeigt hierbei einen Schnitt quer zu den beiden rohrartigen Strukturen aus der Sicht des vorderen Fügepartners 17, während der untere Teil b) der Fig.3 einen Schnitt längs den beiden rohrartigen Strukturen vorderen Fügepartners 17 und des hinteren Fügepartners 14 zeigt.

Im oberen Teil a) der Fig.3 ist der Schweißpin 24 des Schweißschuhs 27 mit dem Pinlager zu sehen, der über einen Pinschaft 28 mit dem Spindelkopf verbunden ist.

Die Gleitfläche 26 des Schweißschuhs 27 ist in ihrer Wölbung der Oberflächenwölbung der beiden Fügepartner formangepasst. Es ist ersichtlich, dass hierbei in gewissen Grenzen die Gleitfläche 26 eines Schweißschuhs 27 den unterschiedlichen Wölbungen unterschiedlicher Fügepartner folgen kann, jedoch erfordert im Prinzip eine unterschiedliche Wölbung der Fügepartner auch eine unterschiedliche Wölbung der Gleitfläche 26. Zumindest erfordern bestimmte Durchmesserbereiche gewisse Formanpassungen. Somit kann erreicht werden, dass mit einem bestimmten Werkzeug mehr als nur ein Rohrdurchmesser abgedeckt werden kann. In dieser Darstellung ist auch eine Seite des Materialaustritts - Bereichs 25 zu sehen. Hier ist im Schnitt eine so genannte Span - Leitstufe 29 zu sehen. Hierbei handelt es sich um eine Kante am Schweißschuh 27, die, in Bewegungsrichtung des Schweißschuhs 27 gesehen, aufgeworfenes Schweißmaterial im Prinzip definiert austreten lässt. Hierbei tritt der Effekt auf, dass nach einer bestimmten Zeit dieses sich an der Span - Leitstufe aufgesammelte Material von allein ablöst ohne den Prozess des Reibrührschweißens zu stören. Dies ist besonders beim Verschweißen von rohrartigen Strukturen von Bedeutung, da sich hier leicht unerwünschte Riefen im Material neben der Schweißnaht bilden können. Hierdurch erhöht sich die Standzeit eines Schweißschuhs 27 als Werkzeug wesentlich.

Im unteren Teil b) der Fig.3 ist der Pinschaft 28 des Schweißschuhs 27 um 90 Grad gedreht dargestellt, wobei der vordere Fügepartner 17 und der hintere Fügepartner 14 bezeichnet sind.

Beim Rührreibschweißen rohrartiger Strukturen kann ein problemfreies Schließen einer Schweißnaht ohne eine so genannte "Lochbildung" dadurch erreicht werden, dass der betreffende Schweißschuh am entsprechenden "Endpunkt" einer Schweißnaht langsam in Richtung der Krümmung weiter vorwärts bewegt wird während der Schweißpin langsam zurück gezogen wird.

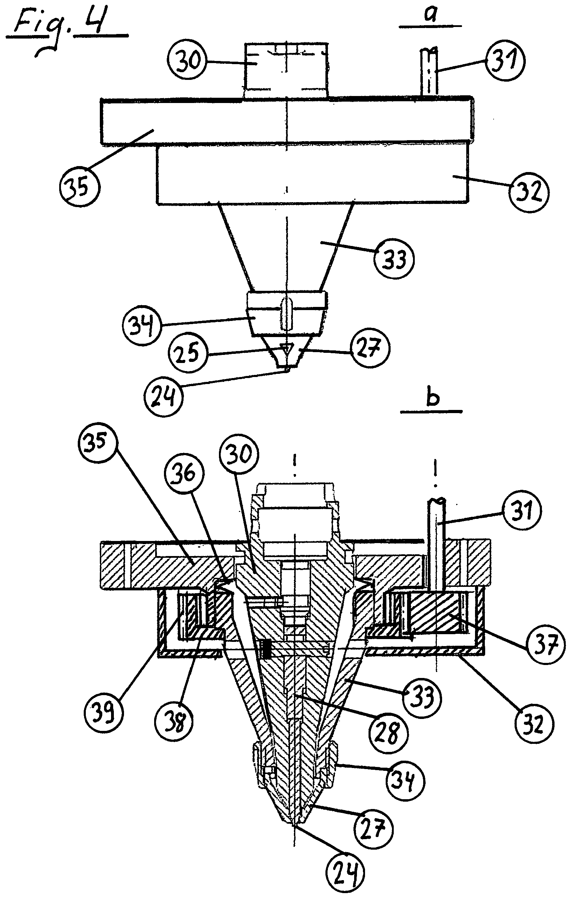

Die Fig. 4: zeigt eine Schnittdarstellung der vertikalen Bewegung eines Schweißschuhs. Im oberen Teil a) der Fig.4 wird die Außenansicht der Halterung eines Schweißschuhs gezeigt, im unteren Teil b) deren Schnittzeichnung.

Im oberen Bereich ist hier die Halterung zur Krafteinleitung des Pin - Aufnahmekegels 30 für den Vorgang des Rührreibschweißens zu sehen, während der Aufnahmeflansch 35 die mechanische Verbindung zum Spindelkopf herstellt. Das weiter gezeigte Gehäuse 32 beinhaltet den Mechanismus zur Absenkung der Halteglocke 33 für einen Schweißschuh, wobei dieser Mechanismus von außen mittels einer Antriebsachse 31 veranlasst wird. Mittels der Überwurfmutter 34 wird ein Schweißschuh an der Halteglocke 33 befestigt. Von dem gezeigten Schweißschuh 27 sind der Schweißpin 24 und der Material - Austrittsbereich 25 bezeichnet.

In der Schnittzeichnung b) der Fig. 4 ist der Pin - Aufnahmekegel 30 mit seinem Pinschaft 28 in seiner ganzen Länge zu sehen. Durch den Aufnahmeflansch 35 ist auf der rechten Seite die Bohrung für die Aufnahme der Antriebsachse 31 zu erkennen, wobei die Antriebsachse 31 an ihrem Ende ein Antriebsritzel 37 trägt das in den Zahnkranz der Außenverzahnung 39 der Überwurfmutter 38 eingreift, wobei die Halteglocke 33 mittels des Feingewindes 50 der Überwurfmutter 38 gleitend am Aufnahmeflansch 35 befestigt ist. Mittels eines auf die Halteglocke 33 von oben einwirkenden Druckelements 36 ist gewährleistet, dass sich die Halteglocke 33 und damit der Schweißschuh 27, der mittels der Überwurfmutter 34 an der Halteglocke 33 befestigt ist, bei einer entsprechenden Drehung der Antriebsachse 31 nach unten bewegt. Bei einer entgegen gesetzten Drehung der Antriebsachse 31 bewegt sich die Halteglocke 33 nach oben. Ein im Bereich der Überwurfmutter 38 an der Halteglocke 33 vorgesehenes Feingewinde 50 konnte aus grapischen Gründen nicht deutlicher dargestellt werden. Am Ende des Schweißschuhs 27 ist der Schweißpin 24 bezeichnet. Auf diese Weise wird mittels der Prozessparameter in Echtzeit eine inkrementale Kraftregelung während des Schweißprozesses ermöglicht. Dies ist beim konventionellen Orbitalschweißen nicht möglich.

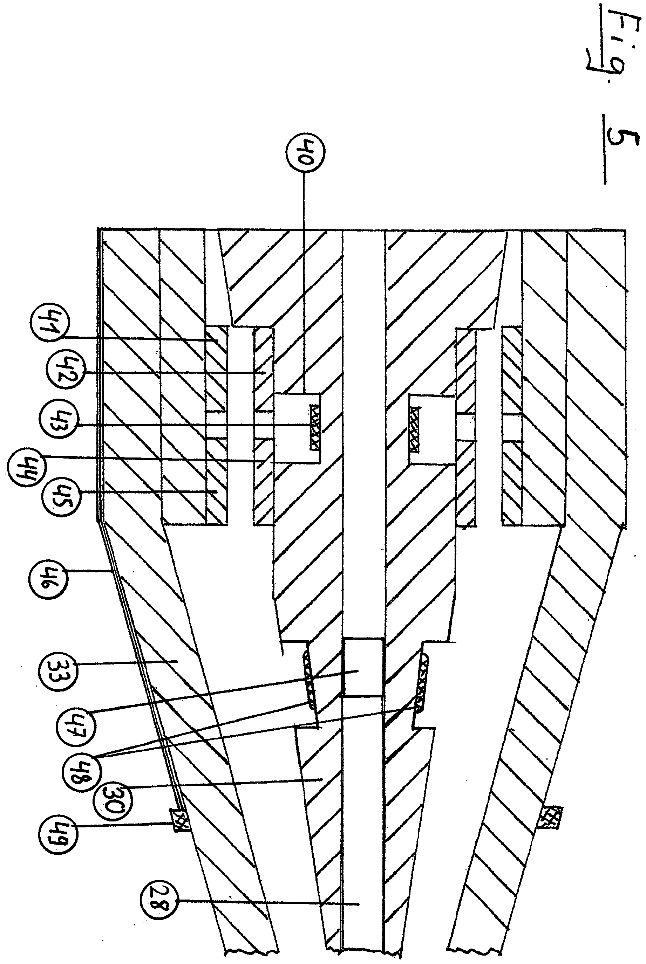

Die Fig. 5: zeigt eine Schnittdarstellung der Erfassung der Prozessparameter durch einen Querschnitt der Halteglocke 33 mit dem zentral in der Längsrichtung angeordneten Pin - Aufnahmekegel 30. Der gezeigte Pin - Aufnahmekegel 30 mit seinem Pinschaft 28 lässt hierbei in seinem breiteren Bereich eine Kegel - Taillierung 40 erkennen die zur Aufnahme eines Sensors 43 dient. Die mechanische Querschnitts - Verengung durch die Kegel - Taillierung 40 und die an dieser Stelle erfolgte Platzierung des Sensors 43 (zum Beispiel als DMS) ermöglichen die Messung des am Pin - Aufnahmekegel 30 angreifenden Drehmoments und die Messung eines hier auftretenden Biegemoments. Direkt an der unteren Kante der gezeigten Halteglocke 33 ist ein linienförmiger Sensor 46 zu erkennen, der in der Regel an der, der Flussrichtung des Schweißprozesses entgegengesetzten Seite der Halteglocke 33 angebracht ist, und bei dem ein zugehöriger Messverstärker 49, und ein Messwert - Sender mit einer, die Mess - Signale weiter vermittelnden Antenne gekennzeichnet ist. Der Sensor 36 ist in der Regel ein Dehnungs - Mess - Streifen der auch eine minimale Verbiegung der Halteglocke 33 während des Schweißprozesses registriert.

Die interne Signalübertragung der von dem Sensor 43 ermittelten Messwerte erfolgt über einen, mit dem Pin - Aufnahmekegel 30 verbundenen, drehbaren Signalverstärker 44 und einer Rotorantenne. Der Empfang und die Weiterleitung der von dem Sensor 44 erfolgt über eine statisch fest stehende Antenne 45.

Im vorderen Bereich des Pin - Aufnahmekegels 30 befindet sich eine weitere, nicht näher bezeichnete, Taillierung, die einem Sensor 48 Raum gibt und die die Messung der auf den Pinschaft 28, und damit den Schweißpin, direkt wirkende Axialkraft ermöglicht.

Optional befindet sich in der Längsachse des Pinschafts 28 ein piezoelektrischer Kraft - Mess - Sensor 47 der ebenfalls der Messung der Axialkraft dient und mittels dessen auch die Längenabmessung einer Schweißpin - Spitze möglich ist. Zur Stromversorgung der beschriebenen Mess - Systeme dient eine induktive Stromversorgung, deren statische primäre Wicklung mit 41 und deren bewegliche sekundäre Wicklung mit 42 bezeichnet ist.

Somit ist gewährleistet, dass mittels der Sensoren 43, 46, 47 und 48, eine induktive Stromversorgung und eines Mess - Signal - Senders mit einer Antenne im Bereich der Halteglocke 33 alle relevanten Prozessparameter während eines Schweißprozesses erfasst werden können und während des Schweißprozesses in Echtzeit zur optimalen Steuerung verwertet werden können.

Die komplexe Steuerung der beschriebenen Bewegungsabläufe erfordert ein spezielles Steuerungsprogramm.

### Bezugszeichenliste

- 1: Verschluss - Vorrichtung
- 2: ringförmiger Grundkörper
- 3: Hubelement zur Zentrierung und Fixierung
- 4: Scharnier des ringförmigen Grundkörpers 2
- 5: Antrieb für einen Hubzylinder 3 in radialer Richtung
- 6: Antrieb für einen Hubzylinder 3 in horizontaler Richtung
- 7: Vertikalschlitten für die Spindeleinheit
- 8: Aufhängung für den Spindelkopf
- 9: Antrieb für den Spindelkopf
- 10: Gehäuse des Spindelkopfs
- 11: Spindelkopf
- 12: Reibschweißpin
- 13: Schweißnaht
- 14: hinterer Fügepartner
- 15: Haltebacke
- 16: äußerer Führungssteg des Grundkörpers 2
- 17: vorderer Fügepartner
- 18: innerer Führungssteg des Grundkörpers 2
- 19: Antrieb zur Vertikalbewegung des Spindelkopfs 10
- 20: Antrieb zur Orbitalbewegung des Spindelkopfs
- 21: Zahnkranz für den Antrieb 20 zur Orbitalbewegung
- 22: Verbindungsbügel
- 23: Fixierring
- 24: Schweißpin
- 25: Materialaustritts - Bereich
- 26: Gleitfläche des Schweißschuhs
- 27: Schweißschuh mit Pinlager
- 28: Pinschaft
- 29: Span - Leitstufe
- 30: Pin - Aufnahmekegel
- 31: Antriebsachse für die Absenkung der Halteglocke
- 32: Gehäuse
- 33: Halteglocke für den Schweißschuh
- 34: Überwurfmutter für die Befestigung des Schweißschuhs
- 35: Aufnahmeflansch
- 36: Druckfederelement für die Absenkung der Halteglocke
- 37: Antriebsritzel der Überwurfmutter der Halteglocke 33
- 38: Überwurfmutter der Halteglocke 33
- 39: Außenverzahnung der Überwurfmutter 38
- 40: Kegel - Taillierung zur Aufnahme eines Sensors
- 41: Primärwicklung einer induktiven Stromversorgung
- 42: Sekundärwicklung einer induktiven Stromversorgung
- 43: Sensor (DMS) für den Werkzeug - Aufnahmekegel
- 44: Sensor - Signalverstärker
- 45: statische Antenne
- 46: Sensor an der Halteglocke 33 (DMS)
- 47: piezoelektrischer Kraft - Mess - Sensor
- 48: Sensor zur Messung der Axialkraft
- 49: Verstärker der Mess - Signale der Werkzeugglocke, mit Sender und Antenne
- 50: Feingewinde

## Patentansprüche

1. Vorrichtung zum mobilen Rührreibschweißen von zwei rohrartigen Strukturen als Fügepartner, mit:
einem ringförmigen Grundkörper (2), der mittels eines Scharniers (4) aufklappbar ist und auf der Gegenseite des Scharniers (4) mittels einer Verschluss-Vorrichtung (1) betriebsfest verbunden werden kann,
einer Mehrzahl von, am Umfang des Grundkörpers (2) verteilten, radial mittels eines Antriebs (5) verfahrbaren, Hubelementen (3), die zur Halterung der rohrartigen Strukturen jeweils eine Haltebacke (15) aufweisen, wobei eine Haltebacke (15) mittels eines Antriebs (6) horizontal verschiebbar gelagert ist,
einem mit dem Grundkörper (2) verbundenen Zahnkranz (21) an dem ein Spindelkopf (11) in einer Orbitalbewegung um die rohrartigen Strukturen mittels eines Antriebs (20) zum Anlegen einer Schweißnaht sich bewegen kann, und
einem Schweißschuh (27), der eine Gleitfläche (27) aufweist, die der Wölbung der Oberflächen der Fügepartner angepasst ist.

2. Vorrichtung nach Anspruch 1, **dadurch gekennzeichnet, dass** der Schweißschuh (27) einen Materialaustritts-Bereich (25), welches überschüssiges Schweiß-Material austreten lässt, und eine Span-Leitstufe (29) in der Form einer Kante am Schweißschuh (27) aufweist.

3. Vorrichtung nach Anspruch 1 oder 2, **dadurch gekennzeichnet,**
**dass** der Schweißschuh (27) mittels einer Antriebsachse (31) im Bereich des Aufnahmeflanschs (35) zur Kraftregelung inkremental vertikal bewegt werden kann.

4. Vorrichtung nach einem der vorhergehenden Ansprüche, **dadurch gekennzeichnet,**
**dass** mittels Sensoren (43, 46, 47, 48), eine induktive Stromversorgung und eines Mess-Signal-Senders mit einer Antenne im Bereich der Halteglocke 33 alle Prozessparameter während eines Schweißprozesses zur inkrementalen Kraftregelung erfasst werden.

5. Vorrichtung nach einem der vorhergehenden Ansprüche, **dadurch gekennzeichnet,**
**dass** zur Halterung und Fixierung der rohrartigen Strukturen dem ringartigen Grundkörper (2) ein zweiter derartiger Grundkörper in der Form eines Fixierrings (23), der mittels einer Anzahl Verbindungsbügel (22) mit dem ersten Grundkörper (2) verbunden ist, zugeordnet ist, wobei der Fixierring (23) Hubzylinder (3) aufweist die mittels des Antriebs (5) radial verfahrbar sind.

6. Verfahren zum mobilen Rührreibschweißen von zwei rohrartigen Strukturen als Fügepartner, mit den folgenden Merkmalen:
ein Grundkörper (2) ist mit einer Mehrzahl von, am Umfang des Grundkörpers (2) verteilten, Hubelementen (3) ausgestattet,
die jeweils an ihrem Ende eine Haltebacke (15) zum Kontakt mit beiden Fügepartnern aufweisen, wobei jedes Hubelement mittels eines, von einer Bedienperson betätigbaren Antriebs (5) in radialer Richtung soweit verfahren wird, bis er durch den Kontakt mit einem Fügepartner und den damit registrierten Widerstand gebremst wird, und wobei alle Hubelemente etwa gleich weit verfahren sind,
die beiden zu verschweißenden rohrartigen Strukturen werden in ihrer Soll-Lage so fixiert, dass für den Schweißprozess ein passender ringförmiger Grundkörper (2) der mittels eines Scharniers aufklappbar ist, um die Fügepartner gelegt und mittels einer Verschluss-Vorrichtung (1) von einer Bedienperson zu einem Ring vervollständigt werden kann,
nach dem Einsetzen eines für den jeweiligen Durchmesser der Fügepartner geeigneten Schweißschuhs (27) in den Spindelkopf (11) kann der Prozess des Rührreibschweißens beginnen, wobei ein problemloses Schließen einer Schweißnaht dadurch erreicht wird, dass der Schweißschuh langsam in Richtung der Krümmung weiter bewegt wird, während ein Schweißpin (24) langsam zurück gezogen wird,
wobei ein Antrieb (6) eine Haltebacke (15) horizontal in Richtung des Grundkörpers zurückzieht, wenn der Spindelkopf (11) in den Bereich der jeweiligen Haltebacke gelangt, und
wobei mittels Sensoren (43, 46, 47, 48) alle Prozessparameter während eines Schweißprozesses zur inkrementalen Kraftregelung erfasst werden.

7. Verfahren nach Anspruch 6, **dadurch gekennzeichnet,**
**dass** die Zentrierung des Grundkörpers (2) mit den Fügepartnern mittels des Ausfahrens der Hubelemente ganz oder teilweise programmgesteuert erfolgt.

8. Verfahren nach einem der Ansprüche 6 oder 7,
**dadurch gekennzeichnet,**
**dass** die einwandfreie Funktion der Verschluss-Vorrichtung (1) mittels einer elektronischen Überwachungsvorrichtung gesichert ist.

9. Computerprogramm mit einem Programmcode zur Durchführung der Verfahrensschritte nach einem der Ansprüche 6 bis 8, wenn das Programm in einem Computer ausgeführt wird.

10. Maschinenlesbarer Träger mit dem Programmcode eines Computerprogramms zur Durchführung des Verfahrens nach einem der Ansprüche 6 bis 8, wenn das Programm in einem Computer ausgeführt wird.

## Claims

1. Apparatus for mobile friction stir welding of two tubular structures as joining partners, comprising:
an annular basic body (2) which is unfoldable by means of a hinge (4) and can be connected fixedly for operation on the opposite side of the hinge (4) by means of a closure device (1),
a plurality of lifting elements (3) which are distributed over the circumference of the basic body (2), are movable radially by means of a drive (5) and each have a holding jaw (15) for holding the tubular structures, wherein a holding jaw (15) is mounted in a horizontally displaceable manner by means of a drive (6),
a toothed ring (21) which is connected to the basic body (2) and on which a spindle head (11) can be moved in an orbital movement about the tubular structures by means of a drive (20) for the application of a weld seam, and
a welding shoe (27) which has a sliding surface (27) which is matched to the curvature of the surfaces of the joining partners.

2. Apparatus according to Claim 1, **characterized in that** the welding shoe (27) has a material outlet region (25), which allows excess welding material to escape, and a chip groove (29) in the form of an edge on the welding shoe (27).

3. Apparatus according to Claim 1 or 2, **characterized in that** the welding shoe (27) can be moved vertically in an incremental manner in the region of the receiving flange (35) by means of a drive spindle (31) for force control.

4. Apparatus according to one of the preceding claims, **characterized in that** all process parameters during a welding process are detected by means of sensors (43, 46, 47, 48), an inductive power supply and of a measuring signal transmitter with an antenna in the region of the bell-shaped holder 33 for incremental force control.

5. Apparatus according to one of the preceding claims, **characterized in that**, for holding and fixing the tubular structures, the annular basic body (2) is assigned a second such basic body in the form of a fixing ring (23) which is connected to the first basic body (2) by means of a number of connecting clips (22), wherein the fixing ring (23) has lifting cylinders (3) which are movable radially by means of the drive (5).

6. Method for mobile friction stir welding of two tubular structures as joining partners, comprising the following features:
a basic body (2) is equipped with a plurality of lifting elements (3) which are distributed over the circumference of the basic body (2) and each have a holding jaw (15) at their end for contact with the two joining partners,
wherein each lifting element is moved in the radial direction by means of a drive (5), which is actuable by an operator, until it is braked by contact with a joining partner and the resistance which is therefore registered,
and wherein all of the lifting elements are moved approximately the same distance,
the two tubular structures to be welded are fixed in their desired position in such a manner that, for the welding process, a suitable annular basic body (2) which is unfoldable by means of a hinge can be placed around the joining partners and completed by an operator by means of a closure device (1) to form a ring,
after a welding shoe (27) which is suitable for the respective diameter of the joining partners is inserted into the spindle head (11), the process of friction stir welding can begin, wherein easy closing of a weld seam is achieved by the welding shoe being slowly moved further in the direction of the curvature while a welding pin (24) is pulled back slowly,
wherein a drive (6) pulls a holding jaw (15) back horizontally in the direction of the basic body when the spindle head (11) passes into the region of the respective holding jaw, and
wherein all process parameters during a welding process are detected by means of sensors (43, 46, 47, 48) for incremental force control.

7. Method according to Claim 6, **characterized in that** the centring of the basic body (2) with the joining partners takes place entirely or partially under program control by means of the extension of the lifting elements.

8. Method according to either of Claims 6 and 7, **characterized in that** the satisfactory functioning of the closure device (1) is ensured by means of an electronic monitoring device.

9. Computer program with a program code for carrying out the method steps according to one of Claims 6 to 8 when the program is executed on a computer.

10. Machine-readable storage medium with the program code of a computer program for carrying out the method according to one of Claims 6 to 8 when the program is executed on a computer.

## Revendications

1. Dispositif de soudage par friction-malaxage mobile de deux structures tubulaires en tant que partenaires d'aboutage, comprenant :
un corps de base (2) de forme annulaire, lequel peut être ouvert au moyen d'une charnière (4) et qui peut être relié de manière opérationnellement fixe sur le côté opposé de la charnière (4) au moyen d'un dispositif de fermeture (1),
une pluralité d'éléments d'excursion (3) répartis sur le pourtour du corps de base (2) et pouvant être déplacés radialement au moyen d'un mécanisme d'entraînement (5), lesquels possèdent respectivement une mâchoire de maintien (15) destinée à maintenir les structures tubulaires, une mâchoire de maintien (15) étant montée coulissante horizontalement au moyen d'un mécanisme d'entraînement (6),
une couronne dentée (21) reliée au corps de base (2), au niveau de laquelle peut se déplacer une tête de broche (11) dans un mouvement orbital autour des structures tubulaires au moyen d'un mécanisme d'entraînement (20) en vue d'appliquer un cordon de soudure, et
un patin de soudage (27), lequel possède une surface de glissement (27) qui est adaptée à la cambrure des surfaces des partenaires d'aboutage.

2. Dispositif selon la revendication 1, **caractérisé en ce que** le patin de soudage (27) possède une zone de sortie de matière (25), qui laisse sortir la matière de soudage en excès, et un étage de guidage de copeau (29) sous la forme d'une arête au niveau du patin de soudage (27).

3. Dispositif selon la revendication 1 ou 2, **caractérisé en ce que** le patin de soudage (27) peut être déplacé verticalement par incréments au moyen d'un axe d'entraînement (31) dans la zone de la bride d'accueil (35) en vue d'une régulation de la force.

4. Dispositif selon l'une des revendications précédentes, **caractérisé en ce que** tous les paramètres de processus pendant un processus de soudage sont acquis au moyen de capteurs (43, 46, 47, 48), une alimentation électrique inductive et d'un émetteur de signal de mesure pourvu d'une antenne dans la zone de la cloche de maintien 33 en vue de la régulation incrémentale de la force.

5. Dispositif selon l'une des revendications précédentes, **caractérisé en ce qu'**en vue de maintenir et de bloquer les structures tubulaires, un deuxième corps de base du même type est associé au corps de base (2) de forme annulaire sous la forme d'un anneau de blocage (23), qui est relié au premier corps de base (2) au moyen d'un certain nombre d'étriers de liaison (22), l'anneau de blocage (23) possédant des vérins d'excursion (3) qui peuvent être déplacés radialement au moyen du mécanisme d'entraînement (5).

6. Procédé de soudage par friction-malaxage mobile de deux structures tubulaires en tant que partenaires d'aboutage, ayant les caractéristiques suivantes :
un corps de base (2) est équipé d'une pluralité d'éléments d'excursion (3) répartis sur le pourtour du corps de base (2), lesquels possèdent respectivement à leur extrémité une mâchoire de maintien (15) destinée à entrer en contact avec les deux partenaires d'aboutage, chaque élément d'excursion étant déplacé dans la direction radiale au moyen d'un mécanisme d'entraînement (5) pouvant être actionné par un opérateur jusqu'à ce qu'il soit freiné par le contact avec un partenaire d'aboutage et la résistance ainsi enregistrée, et tous les éléments d'excursion étant déplacés approximativement à l'identique,
les deux structures tubulaires à souder sont bloquées dans leur position voulue de telle sorte que pour le processus de soudage, un corps de base (2) de forme annulaire adapté, lequel peut être ouvert au moyen d'une charnière, est posé autour des partenaires d'aboutage et peut être complété en un anneau par un opérateur au moyen d'un dispositif de fermeture (1),
après l'introduction dans la tête de broche (11) d'un patin de soudage (27) approprié pour le diamètre respectif des partenaires d'aboutage, le processus de soudage par friction-malaxage peut commencer, une fermeture sans difficulté d'un cordon de soudure étant obtenu par le fait que le patin de soudage est amené à poursuivre son mouvement lentement dans la direction de la courbure pendant qu'une baguette de soudage (24) est lentement retirée,
un mécanisme d'entraînement (6) tirant en arrière une mâchoire de maintien (15) horizontalement en direction du corps de base lorsque la tête de broche (11) arrive dans la zone de la mâchoire de maintien respective, et
tous les paramètres de processus pendant un processus de soudage étant acquis au moyen de capteurs (43, 46, 47, 48) en vue de la régulation incrémentale de la force.

7. Procédé selon la revendication 6, **caractérisé en ce que** le centrage du corps de base (2) avec les partenaires d'aboutage au moyen de la sortie des éléments d'excursion s'effectue entièrement ou partiellement de manière commandée par programme.

8. Procédé selon l'une des revendications 6 ou 7, **caractérisé en ce que** le parfait fonctionnement du dispositif de fermeture (1) est garanti au moyen d'un dispositif de surveillance électronique.

9. Programme informatique comprenant un code de programme destiné à mettre en œuvre les étapes du procédé selon l'une des revendications 6 à 8 lorsque le programme est exécuté dans un ordinateur.

10. Support lisible par machine comprenant le code de programme d'un programme informatique en vue de mettre en œuvre le procédé selon l'une des revendications 6 à 8 lorsque le programme est exécuté dans un ordinateur.
